# EUROPÄISCHE PATENTSCHRIFT

(11) **EP 3 941 952 B1**
(45) Veröffentlichungstag und Bekanntmachung des Hinweises auf die Patenterteilung: **30.04.2025**
(21) Anmeldenummer: 20716692.7
(22) Anmeldetag: 13.03.2020
(51) Int. Cl.: C08F 251/00, C08F 293/00, C08G 63/00, C08K 5/00, C08K 7/28, C08L 53/00

(54) **THERMOPLASTISCHE ELASTOMERZUSAMMENSETZUNG MIT NIEDRIGER DICHTE UND GUTEN MECHANISCHEN EIGENSCHAFTEN DURCH VERWENDUNG VON UNBESCHICHTETEN GLASHOHLKUGELN**
THERMOPLASTIC ELASTOMER COMPOSITION HAVING LOW DENSITY AND GOOD MECHANICAL PROPERTIES BY USING UNCOATED HOLLOW GLASS SPHERES
COMPOSITION ÉLASTOMÈRE THERMOPLASTIQUE DE FAIBLE DENSITÉ PRÉSENTANT DE BONNES PROPRIÉTÉS MÉCANIQUES EN UTILISANT DES BILLES DE VERRE CREUSES NON REVÊTUES

(30) Priorität: 22.03.2019 DE 102019107468
(43) Veröffentlichungstag der Anmeldung: 26.01.2022
(73) Patentinhaber: Kraiburg TPE GmbH & Co. KG, 84478 Waldkraiburg (DE)
(72) Erfinder: VIELSACK, Frieder, 84478 Waldkraiburg (DE); HETTERICH, Martina, 85540 Haar (DE)
(74) Vertreter: Eder Schieschke & Partner mbB
(86) Internationale Anmeldenummer: PCT/DE2020/100190
(87) Internationale Veröffentlichungsnummer: WO 2020/192834

(56) Entgegenhaltungen:
- US-A1- 2014 163 154
- DATABASE WPI Week 201509, Derwent World Patents Index; AN 2015-01836P, XP002799080
- DATABASE WPI Week 201504, Derwent World Patents Index; AN 2015-01836N, XP002799081

## Beschreibung

Die vorliegende Erfindung betrifft eine thermoplastische Elastomerzusammensetzung nach Patentanspruch 1. Ebenso betrifft die vorliegende Erfindung ein Verfahren zur Herstellung eines thermoplastischen Elastomers unter Verwendung der erfindungsgemäßen thermoplastischen Elastomerzusammensetzung sowie das dabei erhaltene thermoplastische Elastomer. Weiterhin betrifft die Erfindung auch diverse Verwendungen des thermoplastischen Elastomers, bei denen ein thermoplastisches Elastomer mit geringer Dichte und trotzdem guten mechanischen Eigenschaften benötigt wird.

Thermoplastische Elastomere werden in vielen Anwendungen oder zur Herstellung diverser Bauteile benötigt. Oft ist hier eine Reduzierung des Gewichts erwünscht, sodass die verwendeten thermoplastischen Elastomere eine niedrige Dichte aufweisen sollen. Die Erniedrigung der Dichte von thermoplastischen Elastomeren soll jedoch nicht zu Lasten der mechanischen Eigenschaften und der Verarbeitbarkeit gehen. Zudem ist es erwünscht, dass zur Herstellung eines thermoplastischen Elastomers mit niedriger Dichte keine Schäumverfahren notwendig sind, und dass sie durch Standardspritzgussverfahren oder Standardextrusionsverfahren verarbeitbar sind.

Vinylalkoxysilane, Vinylacyloxysilane, Methacryloxyalkylacyloxysilane und Methacryloxyalkylalkoxysilane sind bekanntermaßen geeignet für die radikalische Pfropfung von Polyolefinen. Diese sogenannten organofunktionellen Silane sind für die Oberflächenmodifikation von mineralischen und metallischen Oberflächen geeignet, da nahezu alle diese Oberflächen Hydroxylgruppen aufweisen, die in der Regel kovalente Bindungen zu Alkoxysilanen ausbilden (Si-OR + HO-Y -> Si-O-Y + HO-R) und somit die Bindung zwischen Oberfläche und Silan ermöglichen. Da die Oberfläche von Glashohlkugeln mit Si-OH Gruppen übersät ist, die mit den Alkoxysilanen bzw. Acyloxysilanen abreagieren können, eignen sich die Alkoxysilane und die Acyloxysilane hervorragend zur Anbindung von Glashohlkugeln an Polymere.

Bislang sind hier Herstellungsverfahren bekannt, bei denen nicht-funktionalisierte Glassphären über ein funktionalisiertes Elastomer an die elastomere Phase eines thermoplastischen Elastomers angebunden werden. Dies erfolgt durch Einsatz von gegraftetem SBC anstelle von gegraftetem Polypropylen. Die erhaltenen thermoplastischen Elastomere haben jedoch oft keine ausreichend guten mechanischen Werte.

Zur Dichteerniedrigung von reinen, keine Elastomere enthaltenden, thermoplastischen Zusammensetzungen sind Herstellungsverfahren bekannt, bei denen auf die Oberfläche von Glashohlkugeln zunächst eine funktionelle Gruppe aufgebracht wird, an die ein Thermoplast in einem Emulsionsverfahren angekoppelt wird. Die durch das Emulsionsverfahren zunächst funktionalisierten und mit Thermoplast beschichteten Glashohlkugeln müssen anschließend getrocknet und isoliert werden, bevor sie in zusätzlichen Thermoplast eingebettet werden können, für den eine Dichteerniedrigung erwünscht ist. Dieses mehrstufige Verfahren ist nicht nur verfahrenstechnisch aufwendig, sondern auch zeit- und kostenintensiv. Weiterhin sind Verfahren zur Erniedrigung der Dichte von Thermoplast nicht ohne weiteres auf thermoplastische Elastomere übertragbar, da letztere aus mindestens zwei Phasen bestehen.

Weiterhin wurde von den gleichen Anmeldern der vorliegenden Erfindung bereits eine Erfindung zum Patent angemeldet, nämlich in der bislang unveröffentlichten Anmeldung mit der Anmeldenummer DE 10 2017 122 314, in der eine thermoplastische Elastomerzusammensetzung mit niedriger Dichte und guten mechanischen Eigenschaften offenbart wird, die ein Styrol-Blockcopolymer (SBC), ein Polyolefin, das mit einem Anhydrid einer organischen Säure funktionalisiert ist, und Glashohlkugeln aufweist, die mit einem Mittel auf Silan-Basis oberflächenbehandelt bzw. oberflächenbeschichtet sind. Hier sind die Anmelder immer davon ausgegangen, dass die Oberflächenbeschichtung der Glashohlkugeln zur Anbindung der Glashohlkugeln an die thermoplastische Phase notwendig ist, um ein thermoplastisches Elastomer (TPE) bereitstellen zu können, das sowohl leicht ist, als auch gute mechanische Werte aufweist. Vergleichsversuche unter Verwendung eines funktionalisierten SBC anstelle des funktionalisierten Polyolefins haben nämlich zur Gewichtsreduktion des erhaltenen TPE geführt, allerdings mit nicht zufriedenstellenden Werten. Deshalb wurde davon ausgegangen, dass es notwendig ist, dafür zu sorgen, dass die Glashohlkugeln an das verwendete Polyolefin angebunden werden. Dafür wurden in der Vorläuferanmeldung oberflächenbeschichtete Glashohlkugeln und ein funktionalisiertes Polyolefin verwendet, über die eine Anbindung aneinander stattfinden kann.

Überraschenderweise haben nun die Erfinder der vorliegenden Anmeldung festgestellt, dass leichtgewichtige thermoplastische Elastomere mit vergleichbaren mechanischen Eigenschaften auch ohne die Verwendung von oberfächenbehandelten oder oberflächenbeschichteten Glashohlkugeln hergestellt werden können, wenn dennoch das Polyolefin oder das TPC als funktionalisiertes Polyolefin oder funktionalisiertes TPC vorliegt.

Die KR 2014 0145009 A betrifft eine Polypropylenharzzusammensetzung die 60 bis 97 Gew.-% hochkristallines Polypropylenharz, 1 bis 20 Gew.-% einer Kautschukkomponente, 1 bis 10 Gew.-% eines mit Glycidylmethacrylat gepfropftem Polypropylenharz und 1 bis 10 Gew.-% Glasskugeln umfasst.

Die KR 2014 0145010 A betrifft eine Zusammensetzung, die 60 bis 97 Gew.-% eines hochisotaktischen Polypropylens, 1 bis 20 Gew.-% einer Kautschukkomponente, 1 bis 10 Gew.-% Haarkristalle und 1 bis 10 Gew.-% Glasspartikel umfasst.

Die US 2014/0163154 A1 betrifft Polypropylenzusammensetzungen mit verbesserter Haptik und ein Verfahren zu deren Herstellung, wobei die Zusammensetzung eine Mischung aus Reaktor-TPO und Füllstoff umfasst. Die Zusammensetzungen können außerdem Homopolymer-Polypropylen, Random-Copolymer-Polypropylen, Polyamid 6, Ethylen-C-NER1-α-Olefin-Plastomer, Plastomer-Propylen-Ethylen-Copolymer, SEBS-Triblock-Thermoplastelastomer, mit Maleinsäureanhydrid gepfropftes PP, Anti-Kratz-Additive, Antioxidantien, UV-Stabilisatoren und Farbstoffe umfassen.

Dabei löst die vorliegende Erfindung die Aufgabe, ein thermoplastisches Elastomer bzw. eine alternative Zusammensetzung bereitzustellen, die eine niedrige Dichte (vorzugsweise < 0,9 g/cm³) aufweist, und bei welchem bzw. welcher die mechanischen Werte in einem Bereich liegen, der sie für eine Vielzahl von gewünschten Anwendungen geeignet macht. Zudem sind die thermoplastischen Elastomere auf eine einfachere, kostengünstigere und schnellere Weise herstellbar, als wenn zuvor oberflächenbeschichtete Glashohlkugeln eingesetzt werden.

Die erfindungsgemäße thermoplastische Elastomerzusammensetzung weist
- ein Styrol-Blockcopolymer (SBC),
- ein Polyolefin oder ein thermoplastisches Elastomer auf Copolyester-Basis, und
- unbeschichtete Glashohlkugeln auf,
wobei das Polyolefin oder thermoplastische Elastomer auf Copolyester-Basis durch Pfropfungsreaktion mit einem Vinylalkoxysilan, einem Vinylacyloxysilan, einem Methacryloxyalkylalkoxysilan, einem Methacryloxyalkylacyloxysilan oder mit einem Anhydrid einer organischen Säure funktionalisiert ist (funktionalisiertes Polyolefin oder TPC), wobei die thermoplastische Elastomerzusammensetzung zusätzlich ein nicht-funktionalisiertes Polyolefin oder ein nicht-funktionalisiertes thermoplastisches Elastomer auf Copolyester-Basis (TPC) enthalten kann, und wobei das Gewichtsverhältnis der Summe an nicht-funktionalisiertem Polyolefin oder nicht-funktionalisiertem TPC und funktionalisiertem Polyolefin oder funktionalisiertem TPC zu SBC im Bereich von 15:100 bis 140:100 liegt.

Die erfindungsgemäße thermoplastische Elastomerzusammensetzung kann als einfache Mischung ihrer Komponenten zu einem thermoplastischen Elastomer bspw. in einem Extruder verarbeitet werden. Hierfür sind keine aufwendigen Zwischenschritte oder Isolierungen von Zwischenprodukten notwendig.

Gemäß der vorliegenden Anmeldung wird unter einem thermoplastischen Elastomer eines verstanden, das aus einer Polymermischung (Blend) besteht, die ein Elastomer und einen Thermoplast oder thermoplastisches Elastomer umfasst, und bei seiner Gebrauchstemperatur Eigenschaften aufweist, die denen von vulkanisiertem Kautschuk ähnlich sind, das jedoch bei erhöhten Temperaturen wie ein thermoplastischer Kunststoff verarbeitet und aufbereitet werden kann.

Da die erfindungsgemäßen thermoplastischen Elastomerzusammensetzungen als elastomere Komponente ein Styrol-Blockcopolymer (SBC) aufweisen, wird hierin auch von thermoplastischen Elastomerzusammensetzungen auf Styrol-Blockcopolymer-Basis (TPS) gesprochen. Gleiches gilt auch für die erfindungsgemäßen thermoplastischen Elastomere.

Es wird davon ausgegangen, dass aufgrund ihrer Bestandteile die aus der erfindungsgemäßen thermoplastischen Zusammensetzung hergestellten thermoplastischen Elastomere eine thermoplastische Phase und eine elastomere Phase aufweisen, wobei die elastomere Phase das SBC und die thermoplastische Phase das funktionalisierte Polyolefin oder das funktionalisierte TPC umfasst. Es scheint, dass die unbeschichteten Glashohlkugeln ebenso wie die beschichteten Glashohlkugeln der DE 10 2017 122 314 dann eine Affinität zu der thermoplastischen Phase und nicht zu der elastomeren Phase aufweisen, wenn ein funktionalisiertes Polyolefin oder TPC verwendet wird. Vergleichsversuche mit Funktionalisierung des Elastomers anstelle der Funktionalisierung des Polyolefins oder TPCs haben TPE mit wesentlich schlechteren mechanischen Eigenschaften ergeben.

Die zur Herstellung des erfindungsgemäßen thermoplastischen Elastomers verwendeten Glashohlkugeln sind unbeschichtet, d.h. solche, die keine Beschichtung auf ihrer Oberfläche aufweisen. Mit Beschichtung wird in der vorliegenden Erfindung ein der Herstellung der Glashohlkugeln nachträglich folgender Schritt der Funktionalisierung verstanden. Eine unbeschichtete Glashohlkugel ist eine, deren Oberfläche aus dem Glas der Glashohlkugeln gebildet wird.

Insbesondere betrifft die vorliegende Erfindung auch eine Ausführungsform, in der in der erfindungsgemäßen thermoplastischen Elastomerzusammensetzung das Styrol-Blockcopolymer ein Triblockcopolymer ist, bei dem die beiden terminalen Blöcke aus Polystyrol und der mittlere Block aus einem von Polystyrol unterschiedlichen Polymer gebildet sind. Dabei ist es bevorzugt, dass der mittlere Block des Triblockcopolymers von einem Polyolefin gebildet ist. Das Styrol-Blockcopolymer ist bevorzugt eines, das aus der Gruppe ausgewählt ist, die aus SEBS, SEPS, SBS, SEEPS, SiBS, SIS, SIBS oder einer Mischung davon besteht. Weiterhin ist es bevorzugt, dass das Styrol-Blockcopolymer nicht mit einem Anhydrid einer organischen Säure, einem Vinylalkoxysilan, einem Vinylacyloxysilan, einem Methacryloxyalkylalkoxysilan oder einem Methacryloxyalkylacyloxysilan funktionalisiert ist. Stärker bevorzugt ist das Styrol-Blockcopolymer eines, das nicht mit einem Anhydrid einer ungesättigten organischen Säure, einem Vinylalkoxysilan, einem Vinylacyloxysilan, einem Methacryloxyalkylalkoxysilan oder einem Methacryloxyalkylacyloxysilan gepfropft ist. Das Styrol-Blockcopolymer ist vorzugsweise kein gepfropftes Styrol-Blockcopolymer. Das Styrol-Blockcopolymer ist vorzugsweise kein funktionalisiertes Styrol-Blockcopolymer. Das erfindungsgemäß verwendbare Styrol-Blockcopolymer ist weiter unten genauer beschrieben.

In einer weiteren Ausführungsform der vorliegenden Erfindung ist es bevorzugt, dass in der erfindungsgemäßen thermoplastischen Elastomerzusammensetzung die Funktionalisierung des funktionalisierten Polyolefins oder TPCs durch ein Anhydrid einer ungesättigten organischen Dicarbonsäure, vorzugsweise einer organischen 1,2-Dicarbonsäure, oder durch ein Vinylalkoxysilan, ein Vinylacyloxysilan, ein Methacryloxyalkylalkoxysilan, oder ein Methacryloxyalkylacyloxysilan erfolgt.

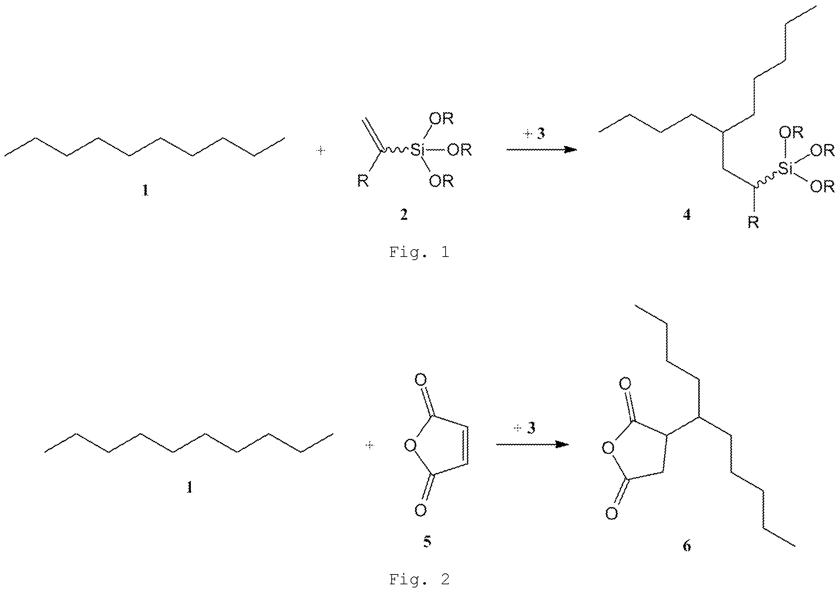

Das Anhydrid einer ungesättigten organischen Carbonsäure oder ein Vinylalkoxysilan, ein Vinylacyloxysilan, ein Methacryloxyalkylalkoxysilan oder ein Methacryloxyalkylacyloxysilan wird an das Polyolefin oder TPC vorzugsweise durch radikalische Pfropfung gebunden. Dazu wird ein Anhydrid einer ungesättigten organischen Carbonsäure oder ein Vinylalkoxysilan, ein Vinylacyloxysilan, ein Methacryloxyalkylalkoxysilan oder ein Methacryloxyalkylacyloxysilan auf ein geeignetes Polyolefin oder TPC "aufgepfropft" (Grafting-Prozess). Hierfür wird vorzugsweise ein Anhydrid einer ungesättigten organischen Säure oder ein Vinylalkoxysilan, ein Vinylacyloxysilan, ein Methacryloxyalkylalkoxysilan oder ein Methacryloxyalkylacyloxysilan verwendet, das eine reaktive Doppelbindung aufweist, im Falle des Anhydrids beispielsweise Maleinsäureanhydrid, im Falle der Organosilane sind es explizit Vinyl- oder Methacrylsäure-funktionalisierte Organosilane. Weitere Details über das Polyolefin oder TPC, das mit einem Anhydrid einer ungesättigten organischen Carbonsäure oder einem Alkoxy- oder Acyloxysilan gegraftet ist, sowie zur Herstellung durch Pfropfungsreaktion sind weiter unten beschrieben und in den Fig. 1 und 2 gezeigt.

Fig. 1 zeigt die Pfropfungsreaktion eines Polyolefins oder TPCs 1 mit einem Vinyl- oder Methacryloxysilan 2 in Gegenwart eines Radikalstarters 3 unter Entstehung eines Vinyl- oder Methacryloxysilan-gegrafteten Polyolefins oder TPCs 4.

Ebenso zeigt die Fig. 2 die Pfropfungsreaktion eines Polyolefins oder TPCs 1 mit Maleinsäureanhyrid (MAH) 5 in Gegenwart eines Radikalstarters 3 unter Entstehung eines MAHgegrafteten Polyolefins oder TPCs 6.

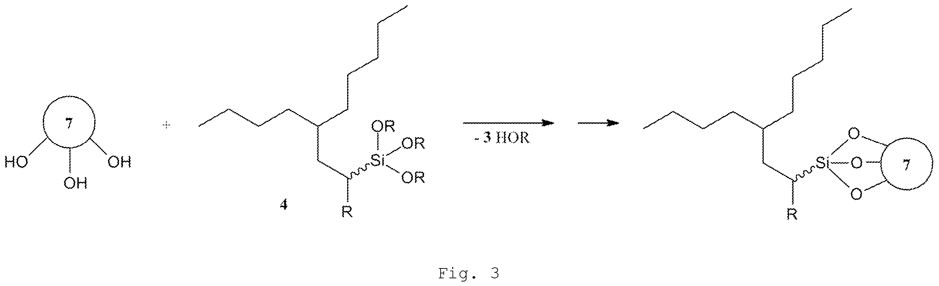

In Fig. 3 ist die Anbindung der Glashohlkugeln 7 an das funktionalisierte Polyolefin oder TPC 4 gezeigt, das gemäß der Gleichung in Fig. 1 hergestellt wurde.

In einer weiteren Ausführungsform der vorliegenden Erfindung ist das funktionalisierte Polyolefin in der erfindungsgemäßen thermoplastischen Zusammensetzung vorzugsweise ein funktionalisiertes Polypropylen. Ganz besonders bevorzugt ist das funktionalisierte Polyolefin ein mit Maleinsäureanhydrid (MAH-g-PP) gegraftetes/gepfropftes Polypropylen.

In einer weiteren Ausführungsform der vorliegenden Erfindung kann die thermoplastische Elastomerzusammensetzung zusätzlich ein Polyolefin oder TPC aufweisen, das vorzugsweise nicht mit einem Anhydrid einer organischen Carbonsäure funktionalisiert ist (nicht-funktionalisiertes Polyolefin oder TPC). Besonders bevorzugt ist das nicht-funktionalisierte Polyolefin Polypropylen oder Polyethylen, stärker bevorzugt Polypropylen. Erfindungsgemäß verwendbare Polyolefine sind weiter unten beschrieben. Es ist zudem bevorzugt, dass das nicht-funktionalisierte Polyolefin zu einer erfindungsgemäßen Zusammensetzung zugegeben wird, in der ein funktionalisiertes Polyolefin eingesetzt wird. Gleichermaßen ist es bevorzugt, dass das nicht-funktionalisierte TPC in einer erfindungsgemäßen Zusammensetzung eingesetzt wird, in der ein funktionalisiertes TPC vorliegt.

In einer Ausführungsform ist es bevorzugt, dass in der erfindungsgemäßen Zusammensetzung ein Polyolefin eingesetzt wird, das durch Pfropfungsreaktion mit einem Anhydrid einer ungesättigten organischen Säure funktionalisiert ist. In dieser Ausführungsform eignet sich das resultierende thermoplastische Elastomer für die Haftung auf Polypropylenen oder Polyamiden.

In einer weiteren Ausführungsform ist es bevorzugt, dass in der erfindungsgemäßen Zusammensetzung ein Polyolefin eingesetzt wird, das durch Pfropfungsreaktion mit einem Vinylalkoxysilan, einem Vinylacyloxysilan, einem Methacryloxyalkylalkoxysilan oder einem Methacryloxyalkylacyloxysilan funktionalisiert ist. In dieser Ausführungsform eignet sich das resultierende thermoplastische Elastomer insbesondere für die Haftung auf Polypropylenen. Ist eine Haftung auf Polyamiden erwünscht, so kann dies durch zusätzliche Zugabe von einem Polyolefin erreicht werden, das durch Pfropfungsreaktion mit einem Anhydrid einer ungesättigten organischen Säure funktionalisiert ist.

In einer weiteren Ausführungsform ist es bevorzugt, dass in der erfindungsgemäßen Zusammensetzung ein TPC eingesetzt wird, das durch Pfropfungsreaktion mit einem Vinylalkoxysilan, einem Vinylacyloxysilan, einem Methacryloxyalkylalkoxysilan oder einem Methacryloxyalkylacyloxysilan oder mit einem Anhydrid einer ungesättigten organischen Säure, vorzugsweise mit einem Anhydrid einer ungesättigten organischen Säure, und noch stärker bevorzugt Maleinsäureanhydrid, funktionalisiert ist. In dieser Ausführungsform wird das resultierende thermoplastische Elastomer vorzugsweise für die Haftung auf polaren Thermoplasten, wie bspw. ABS, PC, PC/ABS, PA oder SAN eingesetzt.

Die thermoplastische Elastomerzusammensetzung kann zudem zusätzlich einen Weichmacher enthalten. Entsprechende Weichmacher, die erfindungsgemäß eingesetzt werden können, sind ebenso weiter unten beschrieben.

Weiterhin kann die erfindungsgemäße thermoplastische Elastomerzusammensetzung auch weitere Additive, wie einen Stabilisator, einen Hilfsstoff, einen Farbstoff, einen weiteren Füllstoff, der keine Glashohlkugel darstellt, und/oder einen Verträglichkeitsvermittler enthalten. Diese sind ebenso weiter unten genauer beschrieben.

Die vorliegende Erfindung betrifft auch ein Verfahren zur Herstellung eines thermoplastischen Elastomers auf Styrol-Blockcopolymer-Basis. Dabei werden die Bestandteile der erfindungsgemäßen thermoplastischen Elastomerzusammensetzung bei einer Temperatur im Bereich von 150°C bis 240°C, vorzugsweise im Bereich von 180°C bis 220°C, miteinander vermischt.

Das erfindungsgemäße Verfahren ist weiter unten detaillierter beschrieben.

Die vorliegende Erfindung betrifft auch ein thermoplastisches Elastomer, das nach dem erfindungsgemäßen Verfahren erhältlich ist bzw. erhalten wird. Das erfindungsgemäße thermoplastische Elastomer zeichnet sich durch eine Härte im Bereich von einer Shore A-Härte von 40 bis zu einer Shore D-Härte von 30, eine geringe Dichte im Bereich von 0,5 bis 1,1 g/cm³, eine Zugfestigkeit von mindestens 2,0 MPa, eine Bruchdehnung von mindestens 100%, und einen Druckverformungsrest bei Raumtemperatur nach 72 Stunden von kleiner als 70% aus. Alle genannten (bevorzugten) Merkmale der erfindungsgemäßen Elastomerzusammensetzung sollen hierin auch für das erfindungsgemäße thermoplastische Elastomer gelten.

Die vorliegende Erfindung betrifft auch die Verwendung eines Polyolefins oder TPCs zur Herstellung einer erfindungsgemäßen thermoplastischen Elastomerzusammensetzung oder eines erfindungsgemäßen thermoplastischen Elastomers, wobei das Polyolefin oder TPC durch Pfropfungsreaktion mit einem Vinylalkoxysilan, einem Vinylacyloxysilan, einem Methacryloxyalkylalkoxysilan oder einem Methacryloxyalkylacyloxysilan oder einem ungesättigtem Anhydrid einer organischen Carbonsäure funktionalisiert ist.

Weiterhin betrifft die vorliegende Erfindung auch die Verwendung von unbeschichteten Glashohlkugeln zur Herstellung einer erfindungsgemäßen thermoplastischen Elastomerzusammensetzung oder eines erfindungsgemäßen thermoplastischen Elastomers.

Es ist bekannt, dass thermoplastische Elastomere sich nicht nur als alleinige Materialien zur Herstellung von etwaigen Erzeugnissen und Artikeln eignen. Vielmehr ist es die Besonderheit dieser Materialklasse mit Thermoplasten (Hartkunststoffe oder Hartkomponenten) Verbindungen einzugehen, und zwar ohne die Verwendung zusätzlicher Klebstoffe, Haftvermittler oder haftvermittelnder Verfahren, wie beispielsweise Coronabehandlungen. Weiterhin ist bekannt, dass die Zusammensetzung des jeweiligen TPE (Weichkomponente) dessen Fähigkeit und Festigkeit des Verbundes mit der ausgewählten Hartkomponente bestimmt. Das Bereitstellen von TPEs mit geeigneten Eigenschaften, um Verbunde zu anderen Thermoplasten einzugehen, ist daher fast immer eine Aufgabe der TPE-Hersteller.

Die vorliegende Erfindung betrifft daher auch die Verwendung eines erfindungsgemäßen thermoplastischen Elastomers zur Herstellung eines Verbundmaterials mit einem Thermoplast (Hartkomponente), wie beispielsweise Polyolefin, Polyamid oder einem weiteren polaren Thermoplast, beziehungsweise zur Haftung der erfindungsgemäßen thermoplastischen Elastomerzusammensetzung auf einem dieser Thermoplaste. In anderen Worten betrifft die vorliegende Erfindung auch ein Verfahren zur Herstellung eines Verbundmaterials aus dem erfindungsgemäßen thermoplastischen Elastomer und einem Thermoplast, wie beispielsweise Polyolefin, Polyamid, oder einem weiteren polaren Thermoplast, wobei die thermoplastische Elastomerzusammensetzung mit dem Thermoplast verbunden wird. Dabei wird bei der erfindungsgemäßen Verwendung bzw. dem erfindungsgemäßen Verfahren als Verarbeitungsmethode zur Herstellung der Artikel Spritzguss, Mehrkomponenten-Spritzguss, Spritzguss-Einlegeverfahren, Extrusion, Co-Extrusion oder Formpressverfahren verwendet, wobei Spritzguss, Mehrkomponenten-Spritzguss, Spritzguss-Einlegeverfahren, Extrusion und Co-Extrusion bevorzugt und Mehrkomponenten-Spritzguss ganz besonders bevorzugt sind. Wie weiter oben beschrieben, eignet sich der Einsatz von funktionalisiertem Polyolefin insbesondere zur Haftung auf Polypropylen oder Polyamid als thermoplastische Hartkomponente. Wie ebenso weiter oben beschrieben, eignet sich der Einsatz von funktionalisiertem TPC insbesondere zur Haftung auf polaren Thermoplasten.

Somit betrifft die vorliegende Erfindung auch ein Verbundmaterial aus einem erfindungsgemäßen thermoplastischen Elastomer und einem Thermoplast, besonders bevorzugt einem Polyamid, Polyolefin oder einem weiteren polaren Thermoplast, wie ABS, PC, PC/ABS oder SAN.

Die vorliegende Erfindung betrifft auch die Verwendung eines erfindungsgemäßen thermoplastischen Elastomers und/oder die Verwendung eines erfindungsgemäßen Verbundmaterials als Bauteil oder Formkörper im Automobilinnen- und -außenbereich, von Industriegeräten, Industriewerkzeugen, Elektrowerkzeugen für den professionellen und/oder privaten Einsatz, Haushaltsgeräten, Produkten im Bereich der Unterhaltungselektronik, medizinischen Verbrauchsartikeln und Geräten, Sportartikeln, Behältern für Hygieneartikel und Kosmetika, Dichtungsmaterialien oder Zubereitungen von Verbrauchsgütern.

Die zuvor genannten und in den erfindungsgemäßen thermoplastischen Elastomerzusammensetzungen oder erfindungsgemäßen thermoplastischen Elastomeren sowie bei den erfindungsgemäßen Verwendungen und Verfahren eingesetzten Komponenten werden im Weiteren genauer beschrieben:
A: Styrol-Blockcopolymer
B: funktionalisiertes Polyolefin oder funktionalisiertes TPC
C: Glashohlkugeln
D: Polyolefin oder TPC (jeweils nicht funktionalisiert)
E: Weichmacher
F: Stabilisator, Hilfsstoff, Farbstoff

### Komponente A: Styrol-Blockcopolymer

Unter dem Begriff "Styrol-Blockcopolymer" (SBC) wird erfindungsgemäß ein Mehrblockcopolymer verstanden, wobei mindestens einer der Blöcke Polystyrol ist. Mindestens einer der weiteren Blöcke ist üblicherweise ein Polybutadien, Polyisopren oder Polyisobuten. Das SBC kann ein Triblockcopolymer der Struktur A-B-A sein, wobei der A-Block üblicherweise Polystyrol ist und der B-Block üblicherweise aus Polybutadien, Polyisopren oder Polyisobuten aufgebaut ist (SBS, SIS, SiBS). Alternativ können im A-Block die Styrol-Monomere teilweise oder vollständig durch Derivate von Styrol, wie beispielsweise α-Methylstyrol, 2-Methylstyrol, 3-Methylstyrol, 4-Methylstyrol, 4-tert-Butylstyrol, 4-Cyclohexylstyrol oder Vinylnaphthalin wie 1-Vinylnaphthalin und 2-Vinylnaphthalin ersetzt werden. Der B-Block kann auch alternativ Mischungen von Dienen enthalten wie SIBS (B-Block aus Mischung von Butadien und Isopren). Weiterhin können SBC bestehend aus Styrol- und Dien-Monomeren auch als hydrierte Derivate zum Einsatz kommen. Dabei liegen die Einheiten der B-Blöcke teilweise oder vollständig hydriert vor. Bevorzugt seien hier Polystyrolblock-poly(ethylen-co-butylen)-block-polystyrol (SEBS), Polystyrol-block-poly(ethylen-co-propylen)-block-polystyrol (SEPS) und Polystyrol-block-poly(ethylen-co-(ethylen-propylen))-block-polystyrol (SEEPS) genannt. Neben Triblock-, können alternativ auch Di-, Tetrablock- oder Multiblockcopolymere aus genannten Monomeren von Styrol, Styrolderivaten (A-Blöcke) und Butadien, Isopren, Isobutylen und deren Mischungen (B-Blöcke) in unterschiedlicher Reihung von A- und B-Blöcken (beispielsweise B-A-B, A-B-A-B, etc.) verwendet werden. Bevorzugte SBC sind aufgebaut aus Triblockcopolymeren A-B-A.

Erfindungsgemäße SBC haben vorzugsweise ein gewichtsgemitteltes Molgewicht (Mw) von 50.000 bis 1.000.000 g/mol, besonders bevorzugt von 100.000 bis 500.000 g/mol.

Das SBC liegt in der erfindungsgemäßen thermoplastischen Elastomerzusammensetzung bzw. im erfindungsgemäßen thermoplastischen Elastomer vorzugsweise in einer Menge im Bereich von 12 Gew.-% bis 30 Gew.-%, stärker bevorzugt in einem Bereich von 15 Gew.-% bis 25 Gew.-% und am stärksten bevorzugt in einem Bereich von 18 Gew.-% bis 23 Gew.-% vor, bezogen auf das Gesamtgewicht der thermoplastischen Elastomerzusammensetzung bzw. des thermoplastischen Elastomers.

### Komponente B: funktionalisiertes Polyolefin oder funktionalisiertes TPC

Erfindungsgemäß ist das Polyolefin oder TPC mit einem Vinylalkoxysilan, einem Vinylacyloxysilan, einem Methacryloxyalkylalkoxysilan oder einem Methacryloxyalkylacyloxysilan oder einem Anhydrid einer ungesättigten organischen Säure funktionalisiert, wie es weiter oben beschrieben ist. Bevorzugt findet die Funktionalisierung mittels Pfropfung (Grafting-Prozess) statt, wobei ein Vinylalkoxysilan, ein Vinylacyloxysilan, ein Methacryloxyalkylalkoxysilan oder ein Methacryloxyalkylacyloxysilan oder ein Anhydrid einer ungesättigten organischen Säure auf ein geeignetes Polyolefin aufgepfropft wird. Nach der Pfropfungsreaktion mit einem Vinylalkoxysilan liegt das Polyolefin oder TPC als 2-Ethylalkoxysilan-modifiziertes Polyolefin oder TPC vor. Nach der Pfropfungsreaktion mit einem Vinylacyloxysilan liegt das Polyolefin oder TPC als 2-Ethyl-acyloxysilan-modifiziertes Polyolefin oder TPC vor. Nach der Pfropfungsreaktion mit einem Methacryloxyalkylalkoxysilan liegt das Polyolefin oder TPC als 2-Methyl-propenoyl-alkylalkoxysilan-modifiziertes Polyolefin oder TPC vor. Nach der Pfropfungsreaktion mit einem Methacryloxyalkylacyloxysilan liegt das Polyolefin oder TPC als 2-Methyl-propenoyl-alkylacyloxysilan-modifiziertes Polyolefin oder TPC vor. Nach der Pfropfungsreaktion mit einem Anhydrid einer ungesättigten organischen Säure liegt das Polyolefin oder TPC als 1,2-Dicarbonsäure-modifiziertes Polyolefin oder TPC vor. Es handelt sich dabei um die Reaktionsprodukte der Umsetzung von Polyolefin oder TPC mit einem Vinylalkoxysilan, einem Vinylacyloxysilan, einem Methacryloxyalkylalkoxysilan oder einem Methacryloxyalkylacyloxysilan oder einem Anhydrid einer ungesättigten organischen Säure mit Hilfe von Radikalstartern gemäß den Reaktionsgleichungen in den Fig. 1 und 2, die weiter oben schon beschrieben sind.

Unter Pfropfung versteht man allgemein, dass bei bereits vorgebildeten Molekülketten eines Primärpolymers (hier das Polyolefin oder TPC) nachträglich andere Molekülbausteine (hier das Vinylalkoxysilan, das Vinylacyloxysilan, das Methacryloxyalkylalkoxysilan oder das Methacryloxyalkylacyloxysilan oder das Anhydrid der ungesättigten organischen Carbonsäure) darauf "aufgepfropft" werden. Man spricht bei derartig funktionalisierten Polymeren auch von "Pfropfpolymeren". Pfropfpolymere können auf verschiedene Arten hergestellt werden, z.B. nach Vermengen des Primärpolymers mit den aufzupfropfenden Molekülbausteinen in einem gewünschten Verhältnis und anschließender Radikalbildung durch Zersetzung von Peroxiden oder durch Bestrahlung, vorzugsweise durch Peroxide. Dabei bilden sich Radikalstellen am Primärpolymer, an die sich die aufzupfropfenden Molekülbausteine anlagern. Hierfür muss das Anhydrid der organischen Carbonsäure eine reaktive Stelle aufweisen, an der die Radikalstelle des Primärpolymers angreifen kann. Eine Pfropfung kann teilweise auch schon eintreten, wenn eine Mischung aus Primärpolymer und aufzupfropfenden Molekülbausteinen intensiv mechanisch-thermisch behandelt wird. Die Pfropfreaktion von Polymeren wird vorzugsweise in einem Festphasenreaktor, Walzwerk, einem Extruder oder in einem Reaktor in Lösung oder Emulsion durchgeführt und ist dem Fachmann im Gebiet der Thermoplaste bekannt. Bevorzugt für Polyolefin oder TPC ist die Reaktion im Festphasenreaktor oder Extruder.

Unter einem Polyolefin werden in der vorliegenden Erfindung Polymere verstanden, die aus Alkenen wie Ethylen, Propylen, 1-Buten oder Isobuten, durch Kettenpolymerisation hergestellt werden. Dabei werden aus den ungesättigten Alkenen durch Polymerisation vorzugsweise gesättigte Polymere hergestellt.

Dabei können erfindungsgemäß die Polyolefine Homopolymere, statistische Copolymere, aber auch Blockcopolymere, wie beispielsweise Polyolefin-Blockcopolymere (OBC) sein, wobei erfindungsgemäß Homopolymere oder statistische Copolymere bevorzugt sind, die vorzugsweise aus Alkenen hergestellt werden, die vorzugsweise aliphatische Alkene sind.

Besonders bevorzugt sind die Polyolefine nicht-elastomere Polyolefine, d.h. weisen keine elastomeren Eigenschaften auf. Stärker bevorzugt sind die Polyolefine Thermoplaste.

Als Basis für die Pfropfung können handelsübliche Polyolefine eingesetzt werden, die im Folgenden beschrieben werden:
Polyolefine können beispielsweise Homopolymere oder statistische Copolymere aus Olefinen sein. Beispiele sind: Copolymere aus Polyethylen, wie HDPE (high density polyethylene), MDPE (medium density polyethylene), LDPE (low density polyethylene), LLDPE (linear low density polyethylene), VLDPE (very low density polyethylene); ein Homopolymer aus Propylen (hPP); ein statistisches Copolymer aus Propylen und Ethylen (rPP); und Kombinationen derselben.

Für die Erfindung geeignete Polyolefine, als Basis für die Funktionalisierung mit dem Anhydrid einer Dicarbonsäure, sind vor allem diejenigen, die sich für die Verarbeitung im Spritzguss eignen. Geeignete Polyolefine sind solche mit guten Fließeigenschaften und Steifigkeit.

Homopolymere von Propylen (hPP) sind kommerziell erhältlich und es kann jedes dieser erhältlichen hPPs erfindungsgemäß eingesetzt werden. Der Einsatz von hPP ist erfindungsgemäß bevorzugt.

Kommerziell erhältliche hPP sind beispielsweise Produkte der LyondellBasell, die unter dem Handelsnamen Moplen^{®} erhältlich sind, wie Moplen^{®} HP500N, Moplen^{®} HP501L.

Statistische Polypropylen-Copolymere (rPP) sind ebenso kommerziell erhältlich und jedes dieser rPPs kann erfindungsgemäß verwendet werden. Als Comonomer ist Ethylen und/oder Buten bevorzugt.

Es können Polyethylene verschiedener Dichte wie HDPE, MDPE, LDPE, LLDPE, VLDPE erfindungsgemäß verwendet werden. Diese sind ausreichend kommerziell verfügbar.

Besonders bevorzugt ist es erfindungsgemäß jedoch, dass das Polyolefin eines ist, das Propylen in seinen Wiederholungseinheiten umfasst. Noch stärker bevorzugt ist das Polyolefin ein hPP.

Die erfindungsgemäß als Polyolefine einsetzbaren OBC sind Blockcopolymere, deren Blöcke aus Olefin-Monomeren als Wiederholungseinheiten aufgebaut sind. Dabei weisen die erfindungsgemäßen OBC mindestens zwei unterschiedliche Polymerblöcke auf. Diese Blöcke können aus einer Olefinsorte oder aus zwei oder mehreren Olefinsorten aufgebaut sein. Die zum Aufbau der erfindungsgemäß verwendbaren OBCs verwendeten Olefine sind aliphatische Olefine, wie bspw. Ethylen, Propylen oder Butylen, wobei erfindungsgemäß Ethylen und Propylen bevorzugt sind. Besonders bevorzugt sind die erfindungsgemäß verwendbaren OBC ausschließlich aus aliphatischen Olefinen als sogenannte Wiederholungseinheiten aufgebaut. Erfindungsgemäß sind von der Definition der OBC solche ausgenommen, die einen aromatischen Rest aufweisen (solche sind für den Fachmann als TPS (thermoplastische Elastomere auf Styrol-Basis) bekannt). Besonders bevorzugt für die hier beschriebene Anwendung beziehungsweise die erfindungsgemäße Zusammensetzung sind OBC, deren Blöcke aus Polypropylen, Polyethylen oder einem statistischen Ethylen/Propylen-Copolymer aufgebaut sind bzw. daraus bestehen. Kommerziell erhältlich sind solche OBC beispielsweise unter dem Handelsnamen Hifax CA 10 A der Fa. LyondellBasell. Weiterhin besonders bevorzugt sind die in US 8,481,637 B2 ausführlich beschriebenen Polyolefin-Blockcopolymere (dort als "olefin block copolymers, OBC" bezeichnet), auf die hier in vollem Umfang Bezug genommen wird. Hierbei handelt es sich um Polymere, die abwechselnde Blöcke eines harten (sehr starren) und eines weichen (hochelastomeren) Segments aufweisen. Solche Produkte werden von Dow Elastomers unter dem Handelsnamen INFUSE^{™} vertrieben. Insbesondere sind die Typen mit Verwendungsempfehlung für TPE bevorzugt (INFUSE^{™} 9010, 9007, 9107, 9807).

Weitere Beispiele erfindungsgemäß verwendbarer OBC sind sogenannte hydrierte Dien-Blockcolymere. Solche Polymere weisen vorzugsweise Polymerblöcke auf, die aus hydriertem Polybutadien oder hydriertem Polyisopren bestehen.

Erfindungsgemäß ist es bevorzugt, dass die OBC zusammen mit einem nicht-elastomeren Polyolefin eingesetzt werden.

Vorzugsweise erfindungsgemäß geeignete TPC (TPE auf Copolyester-Basis) sind im Allgemeinen Copolyester in Form von Copolymeren, die Monomer-Bausteine in der Polymer-Hauptkette aufweisen, die über Ester-Gruppen (-C(=O)-O-) verbunden sind. Solche thermoplastischen Copolyesterelastomere können durch Polykondensation hergestellt werden. Solche Copolyester sind bevorzugt Multiblock-Copolyester, die in der Regel kristalline Segmente aus harten Blöcken (X) und amorphe Segmente aus weichen Blöcken (Y) aufweisen. Geeignete Monomer-Komponenten zum Aufbau von harten Blöcken (X) und weichen Blöcken (Y) in Multiblock-Copolyestern sind dem Fachmann bekannt. Die erfindungsgemäß bevorzugt eingesetzten Copolyester weisen Schmelzpunkte bzw. Erweichungspunkte im Bereich von 160°C bis 300°C, bevorzugt 165°C bis 270°C, besonders bevorzugt 170°C bis 220°C auf. Bevorzugte TPC der vorliegenden Erfindung sind lineare Multiblock-Polyester mit statistischer Verteilung von hochschmelzenden, harten Polyesterblöcken und niedrigschmelzenden, weichen Polyesterblöcken. Dabei bilden die harten Blöcke kristalline Bereiche, die weichen Blöcke amorphe Bereiche, die bei Anwendungstemperaturen der TPC elastisches Verhalten bedingen. Die harten Polyesterblöcke sind vorzugsweise aufgebaut aus kurzkettigen Dicarbonsäuren mit weniger als 4 C-Atomen oder aromatischen Dicarbonsäuren oder Mischungen von Dicarbonsäuren. Bevorzugt sind aromatische Dicarbonsäuren, besonders bevorzugt Isophthalsäure oder Terephthalsäure. Die Alkoholkomponente ist bevorzugt ebenfalls difunktionell und besteht aus kurzkettigen Alkyldiolen oder kurzkettigen Polyoxyalkylendiolen mit weniger als 3 Wiederholungseinheiten oder Mischungen unterschiedlicher Diole. Bevorzugt sind kurzkettige Diole wie Ethylenglykol, 1,3-Propandiol, 1,4-Butandiol, 1,4-Cyclohexandimethanol, besonders bevorzugt ist 1,4-Butandiol. Die weichen Polyesterblöcke bestehen vorzugsweise aus aliphatischen oder aromatischen Dicarbonsäuren, bevorzugt aus aromatischen Dicarbonsäuren, ganz besonders bevorzugt aus Isophthalsäure oder Terephthalsäure. Um weiche Bereiche bei den TPC zu erzeugen, werden unterschiedliche Dioltypen verwendet, Polyetherdiole wie Polyethylenglykole, Polypropylenglykole, Polyethylen-copropylenglykole, Polytetramethylenglykole oder weiche Polyesterdiole aufgebaut aus Alkandicarbonsäuren, beispielweise Adipinsäure oder Sebacinsäure, und Alkandiolen, oder Polycaprolactondiole oder aliphatische Polycarbonatdiole. Es können jedoch auch Mischungen von Diolen eingesetzt werden. Bevorzugt sind harte TPC-Bereiche, aufgebaut aus Terephthalsäure und kurzkettigen Diolen, besonders bevorzugt 1,4-Butandiol, kombiniert mit weichen Bereichen, bevorzugt aufgebaut aus Terephthalsäure und Polyetherdiolen, ganz besonders bevorzugt aus Polytetramethylenglykol. Die als Komponente B in den erfindungsgemäßen Zusammensetzungen geeigneten Copolyester können gemäß dem Fachmann bekannten Verfahren hergestellt werden bzw. sind kommerziell erhältlich. Geeignete kommerziell erhältliche Copolyester sind z. B. TICONA - Riteflex^{®}, P.GROUP - PIBIFLEX^{®}, DSM - Arnitel^{®}, Kolon - KOPEL^{®}, PTS - Uniflex^{®}, Ria-Polymers - Riaflex^{®}, LG Chem. - KEYFLEX^{®}, und DuPont - Hytrel^{®}.

Wird für die Pfropfungsreaktion ein Anhydrid einer ungesättigten organischen Säure eingesetzt, wird besonders bevorzugt Maleinsäureanhydrid verwendet.

Im Falle der Verwendung eines Vinylalkoxysilans, eines Vinylacyloxysilans, eines Methacryloxyalkylalkoxysilans oder eines Methacryloxyalkylacyloxysilans für die Pfropfungsreaktion kann ein Mono-, Di- oder Tri-alkoxy- oder -acyloxysilan verwendet werden, wobei ein Trialkoxysilan oder Triacyloxysilan bevorzugt ist. Die Alkoxygruppen können weiterhin substituierte oder unsubstituierte Alkoxygruppen sein. Bevorzugt sind es C₁₋₈-Alkoxygruppen, wobei Methoxy-, Ethoxy- oder Propoxygruppen stärker bevorzugt und Methoxygruppen am stärksten bevorzugt sind. Die Acyloxygruppen können C₁₋₈-Acyloxygruppen sein, wobei C₁₋₃-Acyloxygruppen stärker bevorzugt und die Acetyloxygruppe am stärksten bevorzugt ist. Die zuletzt genannten Gruppen verbleiben vorzugsweise am Siliciumatom des Silans nach der Pfropfung gebunden. Damit ein Silan aufgepfropft werden kann, hat das aufzupfropfende Alkoxysilan eine weitere Gruppe, die eine Doppelbindung oder eine Epoxygruppe aufweist. Diese Gruppe kann beispielsweise eine substituierte oder unsubstituierte Vinyl-, Epoxy- oder Alkylacrylgruppe (Alkyl = C₁₋₅-Akyl, wobei C₁₋₃-Akyl bevorzugt und Methyl besonders bevorzugt ist) sein, die auch über eine der folgenden Gruppen -(CH₂)ₙ-O- oder -(CH₂)ₙ- an das Siliciumatom des Silans gebunden sein kann, wobei n - 1 bis 5, stärker bevorzugt 1 bis 3 und noch stärker bevorzugt 3 ist, wobei n-propyl am stärksten bevorzugt ist. Im Falle der Gruppe -(CH₂)ₙ-O- bindet das Sauerstoffatom an das Siliciumatom des Silans. Derartige aufzupfropfende Silane sind beispielsweise unter dem Handelsnamen Geniosil^{®} der Fa. Wacker erhältlich.

Bevorzugte Vinylsilane sind: Vinyltrialkoxysilane (spez. Vinyltrimethoxysilan, Vinyltriethoxysilan), Vinylalkyldialkoxysilane (spez. Vinyldimethoxymethylsilan), Vinyltricarboxysilane (spez. Vinyltriacetoxysilan). Diese sind in den folgenden Formeln (I) bis (III) gezeigt: 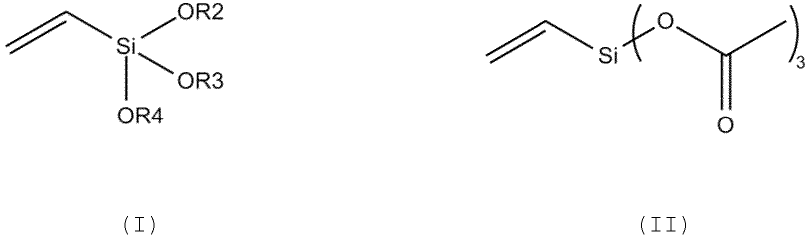 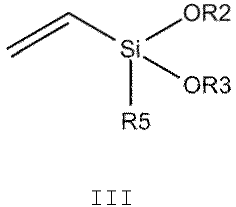 wobei R2 bis R5 jeweils unabhängig voneinander Alkylgruppen, vorzugsweise Methyl- oder Ethylgruppen, sind.

Bevorzugte Methacryloxyalkylalkoxysilane und Methacryloxyalkylacyloxysilane sind: 3-Methacryloxypropyl-trialkoxysilan oder Methacryloxymethyl-trialkoxysilan (spez. 3-Methacryloxypropyl-trimethoxysilan, 3-Methacryloxypropyltriethoxysilan, Methacryloxymethyl-trimethoxysilan, Methacryloxymethyl-triethoxysilan), 3-Methacryloxypropylalkyldialkoxysilan oder Methacryloxymethyl-alkyldialkoxysilan (speziell Methacryloxymethyl-dimethoxymethylsilan), 3-Methacryloxypropyl-tricarboxysilan oder Methacryloxymethyltricarboxysilan (speziell: 3-Methacryloxypropyltriacetoxysilan). Diese sind in den folgenden Formeln (IV) bis (VI) gezeigt: 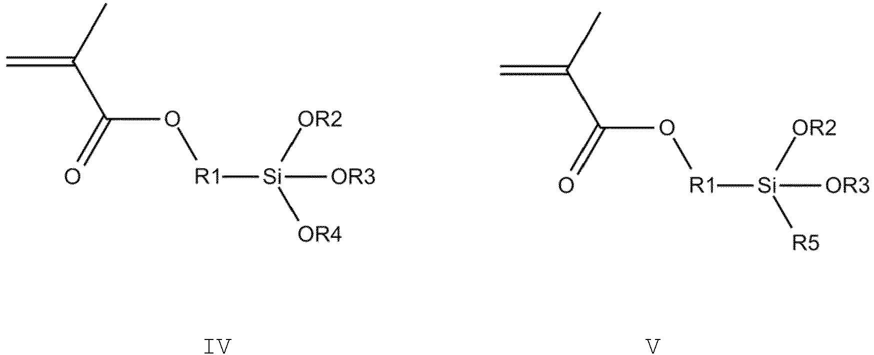 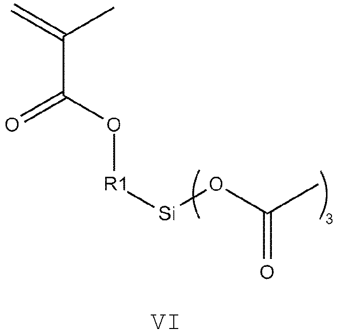 wobei R1 eine Alkylengruppe, vorzugsweise eine Methylen- oder Propylengruppe, ist; und R2 bis R5 jeweils unabhängig voneinander Alkylgruppen, vorzugsweise Methyl- oder Ethylgruppen, sind.

Die Menge des Anhydrids einer ungesättigten organischen Carbonsäure liegt im gepfropften Polyolefin im Bereich von 0,1 Gew.-% bis 5 Gew.-%, noch stärker bevorzugt im Bereich von 0,5 Gew.-% bis 2 Gew.-%, bezogen auf das Gesamtgewicht des Polyolefins, das mit einem Anhydrid einer organischen Carbonsäure funktionalisiert wird.

Die Menge des Vinylalkoxysilans, Vinylacyloxysilans, Methacryloxyalkylalkoxysilans oder Methacryloxyalkylacyloxysilans liegt im gepfropften Polyolefin im Bereich von 0,5 Gew.-% bis 5 Gew.-%, noch stärker bevorzugt im Bereich von 1 Gew.-% bis 4 Gew.-%, bezogen auf das Gesamtgewicht des Polyolefins, das mit einem Vinylalkoxysilan, einem Vinylacyloxysilan, einem Methacryloxyalkylalkoxysilan oder einem Methacryloxyalkylacyloxysilan funktionalisiert wird.

Erfindungsgemäß bevorzugt als Polyolefin wird Polypropylen, besonders bevorzugt hPP verwendet. Ein mit Maleinsäureanhydrid gepfropftes Polypropylen wird in der Fachwelt auch als MAH-g-PP bezeichnet. Ein solches MAH-g-PP ist unter dem Handelsnamen "Scona^{®} TPPP" bekannt und z.B. als die Typen "Scona^{®} TPPP 2112 GA" oder "Scona^{®} TPPP 8112 GA" erhältlich.

Die Menge des Anhydrids einer ungesättigten organischen Carbonsäure liegt im gepfropften TPC im Bereich von 0,1 Gew.-% bis 5 Gew.-%, noch stärker bevorzugt im Bereich von 0,5 Gew.-% bis 2 Gew.-%, bezogen auf das Gesamtgewicht des TPC, das mit einem Anhydrid einer organischen Carbonsäure funktionalisiert wird.

Ein solches MAH-g-TPC ist unter dem Handelsnamen "Scona^{®} TPHY" bekannt und z.B. als "Scona^{®} TPHY 45602 PCX" erhältlich.

In der erfindungsgemäßen thermoplastischen Elastomerzusammensetzung bzw. dem erfindungsgemäßen thermoplastischen Elastomer liegt das Gewichtsverhältnis von funktionalisiertem Polyolefin oder TPC zu SBC vorzugsweise im Bereich von 15:100 bis 140:100, stärker bevorzugt im Bereich von 20:100 bis 98:100.

### Komponente C: Glashohlkugeln

Die für die erfindungsgemäße thermoplastische Elastomerzusammensetzung oder das erfindungsgemäße thermoplastische Elastomer verwendbaren Glashohlkugeln haben eine Glashülle und einen hohlen Kern, und können entweder mit Gas mit Atmosphärendruck oder reduziertem Druck gefüllt sein. Die Glashülle enthält als Hauptkomponente Siliziumdioxid und kann als zusätzliche Komponenten Natriumoxid, Magnesiumoxid, Kalziumoxid, Boroxid, Phosphoroxid und dergleichen enthalten.

Die Glashohlkugeln können im Wesentlichen rund sein, aber auch von dieser Form abweichen, z.B. die Form einer Ellipse aufweisen, und/oder Krater bzw. Dellen in der Oberfläche haben. Es ist bevorzugt, dass die Glashohlkugeln ein Verhältnis von kürzester Achse zu längster Achse von ≥ 0,85, stärker bevorzugt 0,90 und am stärksten bevorzugt 0,95 aufweisen.

Da während des Mischens der erfindungsgemäßen thermoplastischen Elastomerzusammensetzung hohe Scherkräfte wirken, können Glashohlkugeln brechen. Diesen Bruch gilt es durch richtige Wahl der isostatischen Bruchfestigkeit (englisch collapse strength) zu vermeiden. Die Glashohlkugeln weisen vorzugsweise eine isostatische Bruchfestigkeit (10 Volumen-%) von 55 MPa oder mehr, stärker bevorzugt 69 MPa oder mehr und am meisten bevorzugt 100 MPa oder mehr auf. Die "isostatische Bruchfestigkeit (10 Volumen-%)" ist gemäß der ASTM D-3102-78 definiert, wobei eine angemessene Menge der Glashohlkugeln in Glycerin eingebracht und so lange der Druck erhöht wird, bis 10 Volumen-% zerbrochen sind.

Der mittlere Durchmesser ist vorzugsweise im Bereich von 10 µm bis 70 µm, stärker bevorzugt im Bereich von 10 µm bis 35 µm. Der mittlere Durchmesser kann unter Verwendung eines kommerziell erhältlichen Laserbeugungs-Partikelgrößenmessgeräts bestimmt werden.

Die Glashohlkugeln haben vorzugsweise eine Dichte von 0,9 g/cm³ oder weniger, stärker bevorzugt 0,6 g/cm³ oder weniger, und 0,3 g/cm³ oder mehr. Es handelt sich hierbei um die tatsächliche Dichte der Glashohlkugeln und nicht um die Schüttdichte. Die tatsächliche Dichte der Glashohlkugeln wird unter Verwendung eines Pycnometers, wie beispielsweise des Typs AccuPyc II 1340 von Micromeritics bestimmt.

Erfindungsgemäß verwendbare Glashohlkugeln sind von der Firma 3M erhältlich. Vorzugsweise werden erfindungsgemäß Glashohlkugeln des Typs iM16K verwendet.

In der erfindungsgemäßen thermoplastischen Elastomerzusammensetzung bzw. dem erfindungsgemäßen thermoplastischen Elastomer liegt das Gewichtsverhältnis von Glashohlkugeln zu SBC vorzugsweise im Bereich von 30:100 bis 250:100, stärker bevorzugt im Bereich von 50:100 bis 150:100.

### Komponente D: Polyolefin oder TPC (nicht funktionalisiert)

Hier können die gleichen Polyolefine oder TPC verwendet werden, die weiter oben für das funktionalisierte Polyolefin oder funktionalisierte TPC genannt sind (allerdings hier nicht-funktionalisiert).

In der erfindungsgemäßen thermoplastischen Elastomerzusammensetzung bzw. dem erfindungsgemäßen thermoplastischen Elastomer liegt das Gewichtsverhältnis von Polyolefin oder TPC (jeweils nicht funktionalisiert) zu SBC vorzugsweise im Bereich von 0:100 bis 105:100, stärker bevorzugt bis zu 80:100.

Das Gewichtsverhältnis der Summe an Polyolefin oder TPC (jeweils nicht funktionalisiert) und funktionalisiertem Polyolefin oder funktionalisiertem TPC zu SBC liegt im Bereich von 15:100 bis 140:100.

### Komponente E: Weichmacher

Geeignete Weichmacher sind dem Fachmann grundsätzlich bekannt. Geeignete Weichmacher für unpolare Elastomere (z.B. SBCs) sind technische oder medizinische Mineral- oder Weißöle, native Öle, wie beispielsweise Soja- oder Rapsöl, ferner Alkylsulfonylester, insbesondere Alkylsulfonylphenylester, wobei die Alkylsubstituenten lineare und/oder verzweigte Alkylketten mit > 5C-Atomen enthalten. Ferner Di- oder Tri-Alkylester der Mellitsäure, wobei die Alkylsubstituenten vorzugsweise lineare und/oder verzweigte Alkylketten mit > 4 C-Atomen enthalten. Des Weiteren finden auch Alkylester von Di-, Tri- und höheren Polycarbonsäuren, wobei die Alkylsubstituenten vorzugsweise lineare und/oder verzweigte Alkylketten sind, als entsprechende Weichmacher Verwendung. Als Beispiele seien genannt: Adipinsäure-di-2-ethylhexylester und Tributyl-O-acetylcitrat. Weiterhin können auch Carbonsäureester von Mono- und/oder Polyalkylenglycolen als Weichmacher eingesetzt werden, wie beispielsweise Ethylenglycoladipat. Erfindungsgemäß bevorzugt werden hier technische oder medizinische Mineral- oder Weißöle eingesetzt. Genannt sei als technisches Mineralöl Shell Catenex T 145 S.

Als geeignete Weichmacher können auch Mischungen der beschriebenen Substanzklassen eingesetzt werden.

In der erfindungsgemäßen thermoplastischen Elastomerzusammensetzung bzw. dem erfindungsgemäßen thermoplastischen Elastomer liegt das Gewichtsverhältnis von Weichmacher zu SBC vorzugsweise im Bereich von 50:100 bis 300:100, stärker bevorzugt im Bereich von 100:100 bis 250:100.

### Komponente F: Additive wie Stabilisatoren, Hilfsstoffe und Farbmittel

Geeignete Additive sind z.B., aber nicht ausschließlich, Verarbeitungshilfsstoffe, Metallseifen, Fettsäuren und Fettsäurederivate, Paraffinwachse, mikrokristalline Wachse, Gleitmittel, Entformungsmittel, Flammschutzmittel, Rauchgasunterdrücker, Haftvermittler, Markierungsstoffe, Mineralien, Kristallisationsbeschleuniger und -verzögerer, Anti-Fogging-Mittel, Antistatika sowie Biozide und Fungizide.

Als Prozesshilfsstoffe und Stabilisatoren können beispielsweise die folgenden verwendet werden: Alterungs- oder Ozonschutzmittel wie Ozonschutzwachse, Stabilisatoren wie Wärmestabilisatoren, Stabilisatoren gegen Bewitterung; Oxidationsschutzmittel, Antioxidantien, UV-Stabilisatoren, sonstige Lichtschutzmittel, Antischäummittel, Gleitmittel, Dispergiermittel, Trennmittel, Anti-Blocking-Agentien, Radikalfänger, Metalldesaktivatoren, des Weiteren auch Additive wie Schäumhilfen, Treibmittel, Schlagzähmodifikatoren, Haftmittel und Viskositätsmodifikatoren.

Des Weiteren können als Additive Farbmittel wie Farbmasterbatches, Pigmente, Farbstoffe, z.B. Titandioxid, Litophone, Zinkoxid, Eisenoxid, Ultramarinblau, Chromoxid, Antimonsulfit verwendet werden.

In der erfindungsgemäßen thermoplastischen Elastomerzusammensetzung bzw. dem erfindungsgemäßen thermoplastischen Elastomer liegt das Gewichtsverhältnis der Summe aller Additive zu SBC vorzugsweise im Bereich von 0,1:100 bis 50:100, stärker bevorzugt im Bereich von 0,5:100 bis 25:100.

Herstellung der erfindungsgemäßen Zusammensetzungen:
Die thermoplastischen Elastomerzusammensetzungen gemäß der vorliegenden Erfindung können durch Mischen der Komponenten A, B, C, D, E und F - soweit sie in den Zusammensetzungen vorliegen - hergestellt werden. Die Mischung kann dabei unter Verwendung von in der Kautschuktechnologie und Kunststofftechnologie bekannten Mischsystemen wie Knetern, Innenmischern, z. B. Innenmischern mit ineinander greifender oder tangierender Rotorgeometrie, sowie auch in kontinuierlich mischenden Anlagen wie Mischextrudern, z. B. Mischextrudern mit 2 bis 4 und mehr Wellenschnecken (z.B. Doppelschneckenextrudern), erfolgen.

Bei der Durchführung des erfindungsgemäßen Herstellungsverfahrens ist es wichtig, darauf zu achten, dass die Mischungstemperatur hoch genug ist, dass die Komponenten B und D - sofern erfindungsgemäß eingesetzt - in den plastischen Zustand überführt werden können, jedoch dabei nicht geschädigt werden. Dies wird gewährleistet, wenn eine Temperatur oberhalb der höchsten Schmelz- oder Erweichungstemperatur der Komponente B und D - sofern erfindungsgemäß eingesetzt - gewählt wird. Gleichzeitig muss auf einen adäquaten Energieeintrag geachtet werden, der über die Drehzahl und den Durchsatz im Extruder bestimmt ist (siehe Beispiele).

Besonders bevorzugt wird das Mischen der Komponenten - soweit sie in den Zusammensetzungen vorliegen - bei einer Temperatur im Bereich von 150°C bis 240°C und bevorzugt 180°C bis 220°C vorgenommen.

Die in der vorliegenden Anmeldung verwendeten Begriffe "umfassen", "enthalten" und "aufweisen" sollen auch in jedem Fall, in dem sie verwendet werden, den Begriff "bestehen aus" mit umfassen, so dass diese Ausführungsformen auch in dieser Anmeldung offenbart sind.

### Beispiele:

Bestimmungsmethoden und Definitionen:
Die Bestimmung der Dichte erfolgt gemäß DIN EN ISO 1183-1.

Die Bestimmung der Shore-Härte erfolgt gemäß DIN EN ISO 868 und DIN ISO 7619-1.

Die Bestimmung der Zugfestigkeit und Bruchdehnung erfolgt gemäß DIN 53504/ISO 37. Abweichend zur ISO 37 wird der S2 Stab mit einer Vorschubgeschwindigkeit von 200 mm/min geprüft.

Die Bestimmung des Druckverformungsrests erfolgt gemäß DIN ISO 815-1, Methode **A.**

Die Bestimmung des Weiterreißwiderstands erfolgt gemäß ISO 34-1.

Die Haftung der thermoplastischen Elastomerzusammensetzungen auf PA6 wird gemäß VDI2019 bestimmt: Als PA6 wird eines mit der Produktbezeichnung Frianyl B3 V2 NC1102 von Nilit Plastics verwendet. Die Haftung der thermoplastischen Elastomerzusammensetzungen auf Polypropylen (PP) (Typ: Moplen^{®} HP501L; Hersteller: Basell Polyolefins) wird ebenso gemäß VDI2019 bestimmt.

Die Bestimmung des Schmelzflußindex erfolgt gemäß DIN EN ISO 1133.

### Extruder- und Spritzgussparameter:

Die Herstellung der thermoplastischen Elastomere der vorliegenden Erfindung erfolgt in einem kontinuierlichen Prozess auf einem Doppelschneckenextruder (48 L/D). Die Glashohlkugeln werden über eine Seitenfütterung zugegeben. Die Extruderdrehzahl liegt bei 500 U/min, der Durchsatz bei 20 kg/h. Das eingestellte Temperaturprofil verläuft von 170 bis 190°C. Das Extrudat wird granuliert für die spätere Spritzguss- oder Extrusionsverarbeitung.

Die Herstellung der Probekörper erfolgt im Spritzgussverfahren mit einem Temperaturprofil von 180 bis 200°C.

### Ausführungsbeispiele:

Tabelle 1 gibt die verwendeten Abkürzungen für die in den Beispielen und Vergleichsbeispielen eingesetzten Komponenten an:

**Tabelle 1:**

| **Komponente** | **Rohstoff** |
|---|---|
| A | SBC |
| B1 | Polyolefin, mit einem Anhydrid einer organischen Carbonsäure funktionalisiert |
| B2 | Polyolefin, mit einem Alkoxy- oder Acyloxysilan funktionalisiert |
| C | Glashohlkugeln |
| D | Polyolefin (nicht funktionalisiert) |
| E | Weichmacher |
| F | Additive |
| G | silanisierte Glashohlkugeln |
| H | SBC, mit einem Anhydrid einer organischen Carbonsäure funktionalisiert |

### Beispiele und Vergleichsbeispiele:

Herstellung von thermoplastischen Elastomerzusammensetzungen und Elastomeren (erfindungsgemäß und nicht erfindungsgemäß):

Es werden gemäß der oben genannten Herstellungsvariante thermoplastische Elastomere mit den aus Tabellen 3 und 4 ersichtlichen Bestandteilen hergestellt. Tabelle 2 gibt Hersteller und Typ der eingesetzten Komponenten an. In den Tabellen 5 und 6 sind die mechanischen Messwerte und Werte hinsichtlich der Verarbeitbarkeit angegeben.

**Tabelle 2:**

| | **Eingesetzte Rohstoffe** | | |
|---|---|---|---|
| | | | |

| **Komponente** | **Rohstoff** | **Hersteller** | **Typ** |
|---|---|---|---|
| A | SBC (nicht funktionalisiert) | TSRC | Taipol SEBS 6151 |
| B1 | Polyolefin (funktionalisiert) | BYK | Scona TPPP 2112 GA |
| B2 | | 1) LyondellBasell | 1) Moplen HP501L |
| | | 2) Wacker | 2) Geniosil GF 31 |
| C | Glashohlkugeln (unbeschichtet) | 3M | iM16K |
| D | Polyolefin (nicht funktionalisiert) | LyondellBasell | Moplen HP501L |
| E | Weichmacher | Shell | Shell Catenex T 145 S |
| F | Additive: Prozessstabilisator | BASF | Irgafos 168 |
| G | Glashohlkugeln (funktionalisiert) | Hoffmann Mineral | iM16K ASHM |
| H | SBC (funktionalisiert) | BYK | Scona TSKD 9103* |

| | | | |
|---|---|---|---|
| *Maleinsäureanhydrid gegraftetes SEBS | | | |

### Herstellung des Polyolefins B2:

Das funktionalisierte Polyolefin B2 wird durch Pfropfung des Polypropylens Moplen^{®} HP501L mit dem Silan Geniosil^{®} GF 31 hergestellt. Hierzu werden 0,06 Gew.-% Peroxan^{®} HXY-85W (85%ig in Weißöl) gelöst in 5 Gew.-% Geniosil GF 31 flüssig und bei Raumtemperatur zu Moplen^{®} HP501L in einem Doppelschneckenextruder vorgelegt. Die Gew.-% Angaben beziehen sich auf die Menge des eingesetzten Polypropylens. Die Durchmischung erfolgt unter langsamer Aufheizung in der Mischzone auf zunächst 160°C. Danach erfolgt die Erhöhung der Temperatur bis auf 200°C, wobei die radikalische Pfropfung erfolgt. Volatile Bestandteile werden mittels Vakuumentgasung entfernt.

**Tabelle 3:**

| **Zusammensetzungen** | | | | | | |
|---|---|---|---|---|---|---|
| | | **Vergleichsbeispiel 1** | **Vergleichsbeispiel 2** | **Beispiel 1** | **Vergleichsbeispiel 3** | **Beispiel 2** |
| Rohstoff | Komponente | [Gewichtsanteile] | [Gewichtsanteile] | [Gewichtsanteile] | [Gewichtsanteile] | [Gewichtsanteile] |
| SBC (nicht funktionalisiert) | A | 100 | 100 | 100 | 100 | 100 |
| Polyolefin (funktionalisiert) | B1 | | 92 | 92 | 23 | 31 |
| Glashohlkugeln (unbeschichtet) | C | 136 | | 136 | | 115 |
| Polyolefin (nicht funktionalisiert) | D | 92 | | | 9 | |
| Weichmacher | E | 200 | 200 | 200 | 200 | 200 |
| Additive: Prozessstabilisator | F | 0,26 | 0,26 | 0,26 | 0,23 | 0,23 |
| silanisierte Glashohlkugeln | G | | 136 | | 115 | |

| | | | | | | |
|---|---|---|---|---|---|---|
| Vergleichsbeispiel 1: ohne wechselwirkende Gruppen an Polyoletin und Glashohlkugeln; vergleichsbeispiel 2 und 3: mit wechselwirkenden Gruppen an Polyolefin und Glashohlkugeln; Beispiele 1 und 2: mit funktionalisiertem Polyolefin, aber unbeschichteten Glashohlkugeln; | | | | | | |

**Tabelle 4:**

| **Zusammensetzungen** | | | | |
|---|---|---|---|---|
| | | **Beispiel 3** | **Vergleichsbeispiel 4** | **Vergleichsbeispiel 5** |
| Rohstoff | Komponente | [Gewichtsanteile] | [Gewichtsanteile] | [Gewichtsanteile] |
| SBC (nicht funktionalisiert) | A | 100 | 50 | 50 |
| Polyolefin (funktionalisiert) | B1 | | | |
| | B2 | 64 | | |
| Glashohlkugeln (unbeschichtet) | C | 131 | 136 | |
| Polyolefin (nicht funktionalisiert) | D | | 92 | 92 |
| Weichmacher | E | 200 | 200 | 200 |
| Additive: Prozessstabilisator | F | 0,25 | 0,26 | 0,26 |
| Glashohlkugeln (silanisiert) | G | | | 136 |
| SBC (funktionalisiert) | H | | 50 | 50 |

| | | | | |
|---|---|---|---|---|
| Beispiel 3: mit funktionalisiertem Polyolefin, aber unbeschichteten Glashohlkugeln; Vergleichsbeispiel 4: mit funktionalisiertem SBC, aber unbeschichteten Glashohlkugeln; Vergleichsbeispiel 5: mit nicht funktionalisiertem Polyolefin, aber unbeschichteten Glashohlkugeln; | | | | |

**Tabelle 5: Mechanische Werte der Beispiele aus Tabelle 3:**

| **Mechanische Werte** | | | | | | |
|---|---|---|---|---|---|---|
| | | **Vergleichsbeispiel 1** | **Vergleichsbeispiel 2** | **Beispiel 1** | **Vergleichsbeispiel 3** | **Beispiel 2** |
| **Wert** | **Einheit** | | | | | |
| Dichte | g/cm³ | 0,717 | 0,723 | 0,724 | 0,728 | 0,722 |
| Härte | ShA | 78 | 87 | 87 | 59 | 61 |
| Zugfestigkeit | MPa | 3 | 5 | 4,9 | 2,9 | 2,9 |
| Bruchdehnung | % | 587 | 200 | 237 | 293 | 304 |
| Weiterreißwiderstand | N/mm | 14,5 | 20,7 | 22,1 | 10,9 | 11,6 |
| Druckverformungsrest bei 23°C/72h | % | 53 | 35 | 33 | 10 | 13 |
| Druckverformungsrest bei 70°C/24h | % | 69 | 47 | 42 | 22 | 24 |
| Druckverformungsrest bei 100°C/24h | % | 81 | 80 | 81 | 71 | 68 |
| Schmelzflußindex 230°C/5 kg | cm³/10 min | 112 | 74,5 | 79,5 | 18,1 | 9,4 |
| Haftung | N/mm | PP: 3,5 | PA6: 4,2 | | | |

Die Werte für Dichte, Härte, Zugfestigkeit, Bruchdehnung und Weiterreißwiderstand sind bei Raumtemperatur aufgenommen.

**Tabelle 6: Mechanische Werte der Beispiele aus Tabelle 4:**

| **Mechanische Werte** | | | | |
|---|---|---|---|---|
| | | **Beispiel 3** | **Vergleichsbeispiel 4** | **Vergleichsbeispiel 5** |
| **Wert** | **Einheit** | | | |
| Dichte | g/cm³ | 0,728 | 0,747 | 0,724 |
| Härte | ShA | 78 | 84 | 84 |
| Zugfestigkeit | MPa | 4,1 | 2,6 | 2,8 |
| Bruchdehnung | % | 245 | 169 | 36 |
| Weiterreißwiderstand | N/mm | 15,5 | 17,4 | 16,2 |
| Druckverformungsrest bei 23°C/72h | % | 22 | 58 | 57 |
| Druckverformungsrest bei 70°C/24h | % | 34 | 88 | 82 |
| Druckverformungsrest bei 100°C/24h | % | 81 | 96 | 92 |
| Schmelzflußindex 230°C/5 kg | cm³/10 min | 204,2 | 190 | |
| Haftung | N/mm | PP: 3,8 | | |

Die Werte für Dichte, Härte, Zugfestigkeit, Bruchdehnung und Weiterreißwiderstand sind bei Raumtemperatur aufgenommen.

## Patentansprüche

1. Thermoplastische Elastomerzusammensetzung, die
• ein Styrol-Blockcopolymer (SBC),
• ein Polyolefin oder thermoplastisches Elastomer auf Copolyester-Basis (TPC), und
• unbeschichtete Glashohlkugeln umfasst,
wobei das Polyolefin oder thermoplastische Elastomer auf Copolyester-Basis durch Pfropfungsreaktion mit einem Anhydrid einer ungesättigten organischen Säure oder einem Vinylalkoxysilan oder einem Vinylacyloxysilan oder einem Methacryloxyalkylalkoxysilan oder einem Methacryloxyalkylacyloxysilan funktionalisiert ist,
wobei die thermoplastische Elastomerzusammensetzung zusätzlich ein nicht-funktionalisiertes Polyolefin oder ein nicht-funktionalisiertes thermoplastisches Elastomer auf Copolyester-Basis (TPC) enthalten kann, und
wobei das Gewichtsverhältnis der Summe an nicht-funktionalisiertem Polyolefin oder nicht-funktionalisiertem TPC und funktionalisiertem Polyolefin oder funktionalisiertem TPC zu SBC im Bereich von 15:100 bis 140:100 liegt.

2. Thermoplastische Elastomerzusammensetzung nach Anspruch 1, worin das Styrol-Blockcopolymer ein Triblockcopolymer ist, bei dem die beiden terminalen Blöcke aus Polystyrol und der mittlere Block aus einem von Polystyrol unterschiedlichen Polymer gebildet sind.

3. Thermoplastische Elastomerzusammensetzung nach Anspruch 2, worin der mittlere Block des Triblockcopolymers von einem Polyolefin gebildet ist.

4. Thermoplastische Elastomerzusammensetzung nach einem der Ansprüche 1 bis 3, worin das Styrol-Blockcopolymer ein SEBS, SEPS, SBS, SEEPS, SIS, SiBS oder SIBS ist.

5. Thermoplastische Elastomerzusammensetzung nach einem der Ansprüche 1 bis 4, worin das Styrol-Blockcopolymer nicht mit einem Anhydrid einer ungesättigten organischen Säure oder einem Vinylalkoxysilan oder einem Vinylacyloxysilan oder einem Methacryloxyalkylalkoxysilan oder einem Methacryloxyalkylacyloxysilan gepfropft ist.

6. Thermoplastische Elastomerzusammensetzung nach einem der Ansprüche 1 bis 5, worin das Anhydrid einer ungesättigten organischen Säure vorzugsweise ein Anhydrid einer organischen ungesättigten Dicarbonsäure ist, vorzugsweise einer organischen ungesättigten 1,2-Dicarbonsäure.

7. Thermoplastische Elastomerzusammensetzung nach einem der Ansprüche 1 bis 6, die zusätzlich einen Weichmacher enthält.

8. Verfahren zur Herstellung eines thermoplastischen Elastomers, wobei die Bestandteile einer thermoplastischen Elastomerzusammensetzung gemäß einem der Ansprüche 1 bis 7 bei einer Temperatur im Bereich von 150°C bis 240°C miteinander vermischt werden.

9. Thermoplastisches Elastomer, das nach einem Verfahren gemäß Anspruch 8 erhältlich ist.

10. Verwendung eines Polyolefins oder TPC zur Herstellung einer thermoplastischen Elastomerzusammensetzung gemäß einem der Ansprüche 1 bis 7 oder eines thermoplastischen Elastomers gemäß Anspruch 9, wobei das Polyolefin oder TPC mit einem Anhydrid einer organischen Carbonsäure oder einem Vinylalkoxysilan oder einem Vinylacyloxysilan oder einem Methacryloxyalkylalkoxysilan oder einem Methacryloxyalkylacyloxysilan funktionalisiert ist.

11. Verwendung von unbeschichteten Glashohlkugeln zur Herstellung einer thermoplastischen Elastomerzusammensetzung gemäß einem der Ansprüche 1 bis 7 oder eines thermoplastischen Elastomers gemäß Anspruch 9.

12. Verwendung eines thermoplastischen Elastomers gemäß Anspruch 9 zur Herstellung eines Verbundmaterials mit einem Thermoplast.

13. Verbundmaterial aus einem thermoplastischen Elastomer gemäß Anspruch 9 und einem Thermoplast.

14. Verwendung eines thermoplastischen Elastomers gemäß Anspruch 9 und/oder eines Verbundmaterials nach Anspruch 13 als Bauteil oder Formkörper im Automobilinnen- und -außenbereich, von Industriegeräten, Industriewerkzeugen, Elektrowerkzeugen für den professionellen und/oder privaten Einsatz, Haushaltsgeräten, Produkten im Bereich der Unterhaltungselektronik, medizinischen Verbrauchsartikeln und Geräten, Sportartikeln, Behältern für Hygieneartikel und Kosmetika, Dichtungsmaterialien oder Zubereitungen von Verbrauchsgütern.

## Claims

1. Thermoplastic elastomer composition, which comprises
• a styrenic block copolymer (SBC),
• a polyolefin or a copolyester-based thermoplastic elastomer (TPC), and
• uncoated hollow glass spheres,
wherein the polyolefin or the copolyester-based thermoplastic elastomer is functionalized by a grafting reaction with an anhydride of an unsaturated organic acid or a vinylalkoxysilane or a vinylacyloxysilane or a methacryloxyalkylalkoxysilane or a methacryloxyalkylacyloxysilane,
wherein the thermoplastic elastomer composition can additionally contain a non-functionalized polyolefin or a non-functionalized copolyester-based thermoplastic elastomer (TPC), and wherein the weight ratio of the sum of non-functionalized polyolefin or non-functionalized TPC and functionalized polyolefin or functionalized TPC to SBC is in the range of 15:100 to 140:100.

2. Thermoplastic elastomer composition according to claim 1, wherein the styrenic block copolymer is a triblock copolymer, in which the two terminal blocks are formed of polystyrene and the middle block is formed of a polymer other than polystyrene.

3. Thermoplastic elastomer composition according to claim 2, wherein the middle block of the triblock copolymer is formed by a polyolefin.

4. Thermoplastic elastomer composition according to any of claims 1 to 3, wherein the styrenic block copolymer is a SEBS, SEPS, SBS, SEEPS, SIS, SiBS or SIBS.

5. Thermoplastic elastomer composition according to any of claims 1 to 4, wherein the styrenic block copolymer is not grafted with an anhydride of an unsaturated organic acid or a vinylalkoxysilane or a vinylacyloxysilane or a methacryloxyalkylalkoxysilane or a methacryloxyalkylacyloxysilane.

6. Thermoplastic elastomer composition according to any of claims 1 to 5, wherein the anhydride of an unsaturated organic acid is preferably an anhydride of an organic unsaturated dicarboxylic acid, preferably an organic unsaturated 1,2-dicarboxylic acid.

7. Thermoplastic elastomer composition according to any of claims 1 to 6, which additionally contains a plasticizer.

8. Process for producing a thermoplastic elastomer, wherein the components of a thermoplastic elastomer composition according to any of claims 1 to 7 are mixed together at a temperature in the range of 150°C to 240°C.

9. Thermoplastic elastomer obtainable by a process according to claim 8.

10. Use of a polyolefin or TPC for producing a thermoplastic elastomer composition according to any of claims 1 to 7 or a thermoplastic elastomer according to claim 9, wherein the polyolefin or TPC is functionalized with an anhydride of an organic carboxylic acid or a vinylalkoxysilane or a vinylacyloxysilane or a methacryloxyalkylalkoxysilane or a methacryloxyalkylacyloxysilane.

11. Use of uncoated hollow glass spheres for producing a thermoplastic elastomer composition according to any of claims 1 to 7 or a thermoplastic elastomer according to claim 9.

12. Use of a thermoplastic elastomer according to claim 9 for producing a composite material with a thermoplastic.

13. Composite material made of a thermoplastic elastomer according to claim 9 and a thermoplastic.

14. Use of a thermoplastic elastomer according to claim 9 and/or a composite material according to claim 13 as a component or shaped body in the field of automobile interiors and exteriors, industrial equipment, industrial tools, power tools for professional and/or private use, household appliances, products in the field of consumer electronics, medical consumables and devices, sporting goods, containers for hygiene articles and cosmetics, sealing materials or preparations of consumer goods.

## Revendications

1. Composition d'élastomère thermoplastique comprenant
• un copolymère à bloc de styrène (SBC),
• une polyoléfine ou un élastomère thermoplastique à base de copolyester (TPC), et
• des billes creuses en verre non revêtues,
dans laquelle la polyoléfine ou l'élastomère thermoplastique à base de copolyester est fonctionnalisé par une réaction de greffage avec un anhydride d'acide organique insaturé ou un vinylalcoxysilane ou un vinylacyloxysilane ou un méthacryloxyalkylalcoxysilane ou un méthacryloxyalkylacyloxysilane,
dans laquelle la composition d'élastomère thermoplastique peut en outre contenir une polyoléfine non fonctionnalisée ou un élastomère thermoplastique à base de copolyester (TPC) non fonctionnalisé, et dans laquelle le rapport pondéral de la somme de la polyoléfine non fonctionnalisée ou du TPC non fonctionnalisé et de la polyoléfine fonctionnalisée ou du TPC fonctionnalisé au SBC est compris dans la plage allant de 15:100 à 140:100.

2. Composition d'élastomère thermoplastique selon la revendication 1, dans laquelle le copolymère à bloc de styrène est un copolymère tribloc dans lequel les deux blocs terminaux sont formés à partir de polystyrène et le bloc central est formé à partir d'un polymère différent du polystyrène.

3. Composition d'élastomère thermoplastique selon la revendication 2, dans laquelle le bloc central du copolymère tribloc est formé à partir d'une polyoléfine.

4. Composition d'élastomère thermoplastique selon l'une des revendications 1 à 3, dans laquelle le copolymère à bloc de styrène est un SEBS, SEPS, SBS, SEEPS, SIS, SiBS ou SIBS.

5. Composition d'élastomère thermoplastique selon l'une des revendications 1 à 4, dans laquelle le copolymère à bloc de styrène n'est pas greffé avec un anhydride d'acide organique insaturé ou un vinylalcoxysilane ou un vinylacyloxysilane ou un méthacryloxyalkylalcoxysilane ou un méthacryloxyalkylacyloxysilane.

6. Composition d'élastomère thermoplastique selon l'une des revendications 1 à 5, dans laquelle l'anhydride d'acide organique insaturé est de préférence un anhydride d'acide dicarboxylique organique insaturé, de préférence d'acide 1,2-dicarboxylique organique insaturé.

7. Composition d'élastomère thermoplastique selon l'une des revendications 1 à 6, comprenant en outre un plastifiant.

8. Procédé permettant la préparation d'un élastomère thermoplastique, dans lequel les constituants d'une composition d'élastomère thermoplastique selon l'une des revendications 1 à 7 sont mélangés ensemble à une température comprise dans la plage allant de 150 °C à 240 °C.

9. Élastomère thermoplastique pouvant être obtenu selon un procédé selon la revendication 8.

10. Utilisation d'une polyoléfine ou d'un TPC pour la préparation d'une composition d'élastomère thermoplastique selon l'une des revendications 1 à 7 ou d'un élastomère thermoplastique selon la revendication 9, dans laquelle la polyoléfine ou le TPC est fonctionnalisé par un anhydride d'acide carboxylique organique ou un vinylalcoxysilane ou un vinylacyloxysilane ou un méthacryloxyalkylalcoxysilane ou un méthacryloxyalkylacyloxysilane.

11. Utilisation de billes creuses en verre non revêtues pour la préparation d'une composition d'élastomère thermoplastique selon l'une des revendications 1 à 7 ou d'un élastomère thermoplastique selon la revendication 9.

12. Utilisation d'un élastomère thermoplastique selon la revendication 9 pour la préparation d'un matériau composite comportant un thermoplastique.

13. Matériau composite constitué d'un élastomère thermoplastique selon la revendication 9 et d'un thermoplastique.

14. Utilisation d'un élastomère thermoplastique selon la revendication 9 et/ou d'un matériau composite selon la revendication 13 comme composant ou corps moulé à l'intérieur et l'extérieur d'un véhicule automobile, dans des appareils industriels, outils industriels, outils électriques à usage professionnel et/ou privé, appareils ménagers, produits dans le domaine de l'électronique de divertissement, marchandises et appareils médicaux, articles de sport, récipients pour produits d'hygiène et cosmétiques, matériaux d'étanchéité ou préparations de biens de consommation.
